# EUROPEAN PATENT SPECIFICATION

(11) **EP 1 234 444 B1**
(45) Date of publication and mention of the grant of the patent: **07.10.2009**
(21) Application number: 00978183.2
(22) Date of filing: 17.11.2000
(51) Int. Cl.: H04N 7/14

(54) **PROCEDURE AND ARRANGEMENT AT VIDEO CONFERENCE SYSTEM**
VERFAHREN UND VORRICHTUNG FÜR EIN VIDEOKONFERENZSYSTEM
TECHNIQUE ET DISPOSITIF POUR SYSTEME DE VIDEOCONFERENCE

(30) Priority: 19.11.1999 SE 9904218
(43) Date of publication of application: 28.08.2002
(73) Proprietor: TELIASONERA AB, 123 86 Farsta (SE)
(72) Inventor: NYSTEDT, Per, S-116 30 Stockholm (SE)
(74) Representative: Aurell, Henrik
(86) International application number: PCT/SE2000/002278
(87) International publication number: WO 2001/037559

(56) References cited:
- EP-A- 0 454 244
- WO-A1-00/52526
- US-A- 5 400 069
- US-A- 5 751 445
- US-A- 5 990 932
- DATABASE WPI Week 199743, Derwent Publications Ltd., London, GB; AN 1990-121923, XP002905271 & JP 9 214 924 A (CANON KK) 15 August 1997 & PATENT ABSTRACTS OF JAPAN & JP 09 214 924 A (CANON INC)
- PATENT ABSTRACTS OF JAPAN & JP 60 208 184 A (NIPPON DENKI KK) 19 October 1985
- PATENT ABSTRACTS OF JAPAN & JP 10 133 306 A (IND TECHNOL RES INST) 22 May 1998
- PATENT ABSTRACTS OF JAPAN & JP 09 083 915 A (NIKON CORP) 28 March 1997
- PATENT ABSTRACTS OF JAPAN & JP 08 009 356 A (NEC ENG LTD) 12 January 1996

## Description

### TECHNICAL FIELD

Procedure and arrangement to transmit stills and/or moving pictures in a video conference system to a first presentation surface area at which one or more subjects (persons) and a second presentation surface area are filmed by a camera, at which said objects wholly or partially during the filming cover said second presentation surface area.

### PRIOR ART

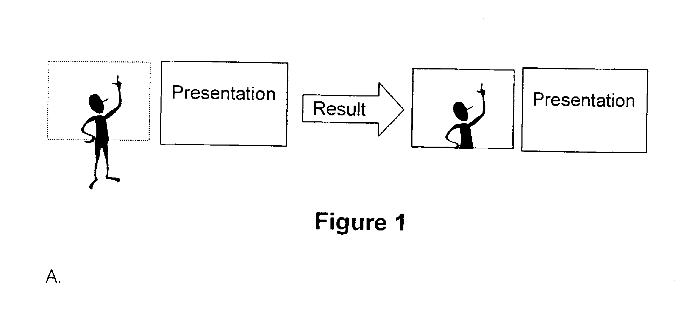

Video conference systems are generally previously known and are today used in a plurality of different applications.
By the Swedish patent application SE-9902626-2 such a conference system is shown.
A common application is that one in a company wants to have possibility to communicate with other units of a company in different localities. Another application is at different types of education/training situations. The video conference system then is built up in such a way that there is a video camera and presentation monitor, or other presentation surface area, at either unit and it is possible to transmit both sound and video of the talking person.
The most common method today is that the commentator is standing at the side of his/her presentation where he/she can be filmed without the presentation, which is constituted by some type of writing board or other object functioning as means, being part of the video. This has the big disadvantage that the commentator cannot point within the presentation. An illustration of this situation is shown in Figure 1.

### TECHNICAL PROBLEM

In connection with video conference, one preferably wants to have possibility to film both the one who is making the presentation and the presentation material he/she is showing, because the lecturer frequently is pointing within his/her material. A big problem on these occasions then is that video recording of presentation pictures does not reproduce the material into its original quality, the solution will be poor, and there are frequently problems with the light. In reality today the presentation material and the lecturer are not filmed at the same time, with one video camera, when a good quality is wanted. The normal way of solving this is to apply the method according to the previously known technology and film the lecturer and the presentation surface area separately. Then a separation of data and video signals and good quality at the receiver is achieved. The present invention provides a video conference arrangement which results in that it will be possible to film both the lecturer and the presentation surface area with good quality, and that the lecturer can point within the presentation surface area without quality degradation.

### SOLUTION

The solution is shown by the statements in the patent claims.

### ADVANTAGES

The invention provides a lot of advantages. Firstly a way and an arrangement is achieved which reproduces a lecturer and presentation material in its original condition. Further, a better solution is achieved.
Another advantage is that the commentator can point within his/her presentation material during the filming, without causing a degradation of the showing of the film at the participants in the video conference.

### LIST OF FIGURES

Figure 1 shows in a schematic way the previously known way of filming, from which the invention proceeds.
   A. As it functions today. Filmed surface area is marked with dotted rectangle; data presentation is transmitted separately.
Figure 2 shows a filmed commentator and the presentation surface area and its reproduction at a presentation.
   B. The commentator can point within the presentation.
Figure 3 shows persons meeting, though being in different localities.
Figure 4 shows a system configuration according to the invention.
Figure 5 shows how the light is synchronized at filming.
Figure 6 shows how persons are meeting at a common meeting place.

### DETAILED DESCRIPTION

In Figure 1 is shown the previously known technology in connection with video conference where a person (in dotted rectangle) lecturing is filmed by a camera (not shown) together with a presentation surface area which is also filmed by a camera (not shown). This film information then is transmitted in ordinary way to a remotely located place where the person is projected by a projector on some kind of surface area. The same applies to the presentation material that will be projected on a suitable surface. This figure consequently shows a usual way of transmitting information to another place and sitting in a video conference.

When one wants to transmit, in a video conference system, a moving picture of a person and it is only the picture of the person that shall be transmitted, the normal procedure is that the person is filmed against a neutral background with one in advance defined quality. The surface area against which the person is filmed can for instance be white. When the person is standing in front of a surface area with only one quality, there are no problems to separate the person from the background. This is made by means of known technology. By means of blue screen chromakey, it will be possible to eliminate the background in a picture. This can be done when one knows the exact quality of the background; in blue screen chromakey one knows, for instance, that the background is entirely blue, which means that all picture elements that are all blue can be eliminated.

However, the fact is that if one has one by light projected picture of a moving object, or a still picture of, for instance, an overhead transparency on the surface that is located behind the person being filmed, it is not so easy to separate the person from the picture that is shown on the surface behind, which constitutes a presentation surface area.

The solution of this, according to the invention, is to film the person and the presentation surface area when the presentation picture is not shown.

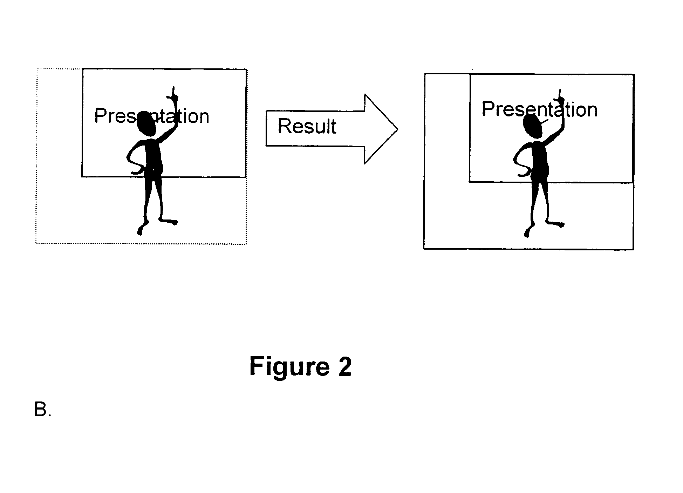

A number (about 7 and upwards) times per second the projector is put out (or blocked out/dimmed) (and the projection surface area is given one single distinguishable quality) during a short interval of time.
The time interval must be sufficiently long to make it possible for the camera to take a picture, and the interval at the same time must be sufficiently short to prevent present persons who are looking directly at the presentation, from perceiving this interval. Cameras today have shutter speeds down to 1/500 second at normal illumination. If, during this short time interval (1/500 second), the projector is put out or blocked/dimmed, it is not noticed by persons present at the presentation. However, it will be possible to film during this recurrent short interval. That will make it possible to separate background and person by means of chromakey (the luminance or chrominance). When the pictures reach the receiver, they are mixed or superimposed on a projection surface area that shall show the pictures, without creating a poor result (impaired contrast or interference). One alternative is to transmit the video signal as it is, without separating background from person and then mix the pictures at receiver location. See Figure 2.

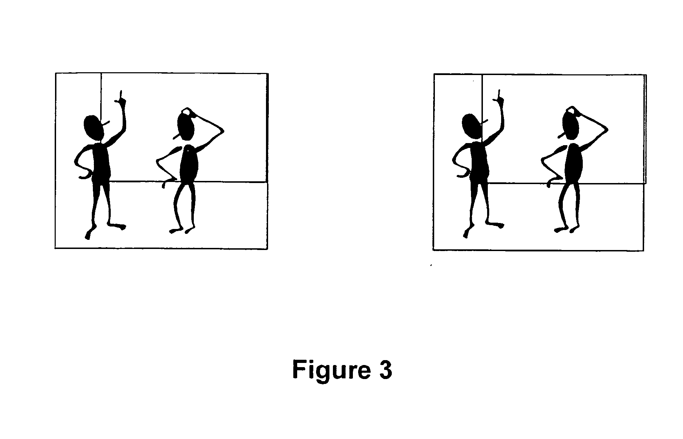

Another effect that occurs is that there is no feedback in the video signal if both sides (both video conference localities) are transmitting video of the same surface area. This means that it will be possible to meet up on the stage, at the presentation surface area. See Figure 3.

Above said does not only apply to projectors; the technology can also be used together with other picture presentation equipment.

Below two examples are described of how the technology can be used.

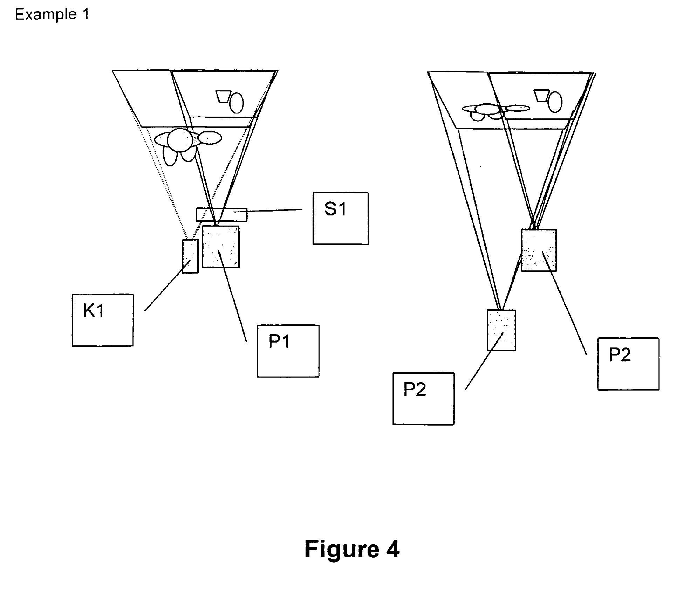

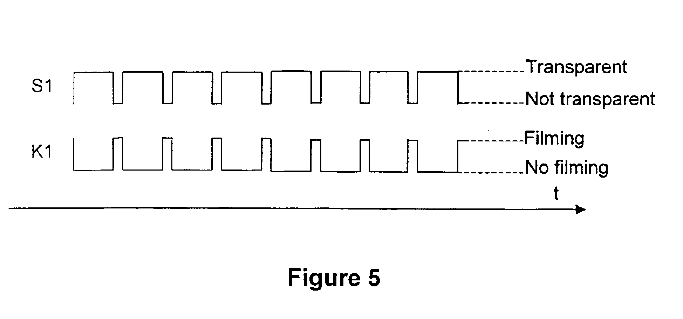

Embodiment example 1 is shown and illustrated in Figure 4. In the figure, Sl indicates a so called LCD-shutter, or a device that blocks the camera at certain times. An LCD-shutter either lets light pass, or is not transparent. The camera K1 and the LCD-shutter are "counter-synchronized", i.e. the light from the projector P1 does not reach the screen when the camera K1 is filming. This is schematically shown by the synchronization curves that are shown in Figure 5. The camera arrangement shows to the left in the figure a transmitter end located in a room where a commentator is, and diagonally behind the commentator there is a presentation surface area where pictures can be projected by a projector P1.
To the right in the figure there is shown a receiver end where the commentator is projected by a projector P2 and is shown full-figure at the side of the there located presentation surface area.

Before the by camera K1 recorded video is transmitted, the background is eliminated by "ordinary" chromakey and a black background is added there instead; in that way the light from the background will not interfere with the presentation material. At the receiver end the two pictures are superimposed, i.e. the video and transmitted presentation material.

The procedure according to the invention is that still pictures and/or moving pictures are transmitted from a room where a person is giving for instance a lecture, to a remotely located room where there is equipment to receive and via projectors project these pictures on a first presentation surface area.
In the room where video recording is made, and from where the transmission is made, there is a camera that films a lecturer who at his/her side has a presentation surface area on which a projected picture is shown. The video filming of the lecturer and the presentation surface area is made by one camera. The filming of the lecturer and the presentation surface area is made when no picture is shown on the presentation surface area, which occurs 7 or more times per second during the filming. At the times when no picture is shown on the presentation surface area, the projector that produces the picture on the projection surface area is blocked out by an LCD-shutter. This is not noticed by the audience who are there looking at the presentation. Because the time when the picture is not shown on the presentation surface area is very short, the eye will not have time to perceive it.

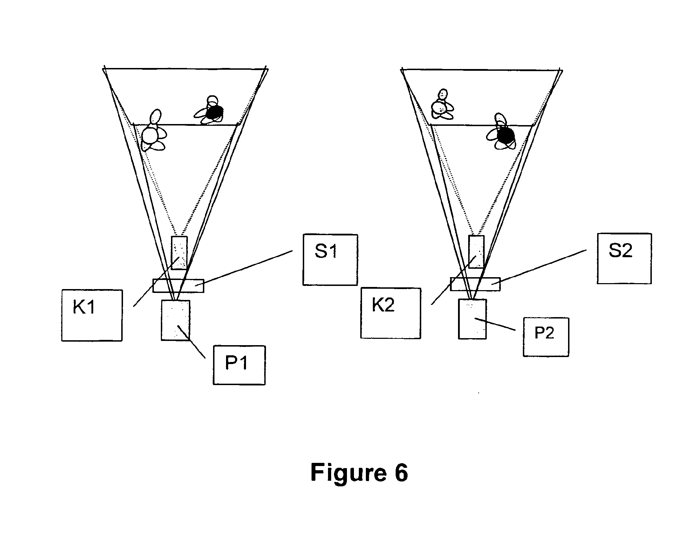

Embodiment example 2 is shown in Figure 6.
In this example the situation is illustrated schematically where two in relation to each other remotely located rooms are in contact with each other, and the person who is not physically present will be "present" as a projected picture from the second room. At this example there are parallel equipment in the two rooms represented by camera, projector and LCD-shutter. As for the rest, the transmission will function in the same way as has previously been described. Two persons consequently can meet at a common two-dimensional meeting place.

The invention is not limited to the above shown examples, but can be modified in a lot of ways within the frame of the idea that is given in the patent claims.

## Claims

1. Procedure for transmitting still pictures and/or moving pictures in a video conference system to a first presentation surface area, said procedure comprising filming one or more persons and a second presentation surface area by a camera, wherein said persons wholly or partially during the filming cover said second presentation surface area **characterized in that** said procedure comprises
blocking a projector, which produces a presentation picture on the second presentation surface area, for a short moment so that a human's eye will not have time to perceive it,
wherein, said filming of said person and said second presentation surface area is performed during said blocking moment, when said presentation picture is not shown on said second presentation surface area;
transmitting said filming of said person and said second presentation surface area;
separating the pictures of said persons from the presentation picture in said filming; and
superimposing said separated pictures of said person and said presentation picture on said first presentation surface area.

2. Procedure as claimed in patent claim 1, **characterized in that** a background with one in advance defined quality appears on the second presentation area during the time the projector is blocked out.

3. Procedure as claimed in patent claim 1, **characterized in that** the projector is blocked out 7 or more times per second.

4. Procedure as claimed in patent claim 1, **characterized in that** the projector shows a moving picture of one or more persons on said second presentation surface area.

5. Arrangement to transfer or transmit still pictures and/or moving pictures in a video conference system to a first presentation surface area, where one or more persons and a second presentation surface area are filmed by a camera, at which said one or more persons wholly or partially during the filming cover said second presentation surface area **characterized in that** the arrangement includes
• a transmitter room where at least one person is giving a lecture or the like;
• a second presentation surface area where some type of presentation is shown within which the lecturer is pointing, at the lecture;
• at least one camera for filming said at least one person, such as the lecturer, and said second presentation surface area.
• a projector that produces said presentation as a picture on said second presentation surface area;
• an LCD-shutter or a device that blocks said projector at given times;
• a remotely located room which receives information from the transmitter room which remotely located room includes at least one projector and said first presentation surface area,
wherein the at least one camera is filming said at least one person and said second presentation surface area when said projector is blocked by said LCD-shutter or device for a short moment, so that a human's eye will not perceive it, and not projecting said picture on said second presentation surface area;
means for transmitting said filming of said person and said second presentation surface area;
means for separating the pictures of the person from the presentation picture in said filming ; and
means for superimposing said separated pictures of said person and presentation picture on said first presentation surface area.

6. Arrangement as claimed in patent claim 5, **characterized in that** LCD-shutter either lets light pass, or is not transparent.

7. Arrangement as claimed in patent claim 5, **characterized in that** LCD-shutter will be not transparent 7 or more times per second.

8. Arrangement as claimed in patent claim 5, **characterized in that** one of said cameras films both said persons and the second presentation surface area, at which the second said camera films said second presentation surface area.

9. Arrangement as claimed in patent claim 5, **characterized in that** said cameras are "counter-synchronized", i.e. the light from said projector does not reach the screen when the camera that films both said persons and the second presentation surface area, is filming.

10. Arrangement as claimed in patent claim 5, **characterized in that** the two rooms serve as transmitter room and receiver room at the same time and includes necessary equipment for this.

## Patentansprüche

1. Verfahren zum Senden von Festbildern und/oder Bewegtbildern in einem Videokonferenzsystem zu einem ersten Präsentationsoberflächenbereich, wobei das Verfahren ein Filmen ein oder mehrerer Personen und eines zweiten Präsentationsoberflächenbereichs durch eine Kamera umfasst, wobei die Personen während dem Filmen den zweiten Präsentationsoberflächenbereich ganz oder teilweise abdecken, **dadurch gekennzeichnet, dass** das Verfahren umfasst:
Blockieren eines Projektors, der ein Präsentationsbild auf dem zweiten Präsentationsoberflächenbereich erzeugt, für einen kurzen Augenblick, so dass ein Menschenauge keine Zeit hat, dieses wahrzunehmen,
wobei das Filmen der Person und des zweiten Präsentationsoberflächenbereiches während dem Blockieraugenblick durchgeführt wird, wenn das Präsentationsbild nicht auf dem zweiten Präsentationsoberflächenbereich gezeigt wird;
Senden des Filmens der Person und des zweiten Präsentationsoberflächenbereiches;
Trennen der Bilder der Personen von dem Präsentationsbild in dem Filmen; und
Überlagern der getrennten Bilder der Person und des Präsentationsbildes auf dem ersten Präsentationsoberflächenbereich.

2. Verfahren nach Anspruch 1, **dadurch gekennzeichnet, dass** ein Hintergrund mit einer im Voraus definierten Qualität auf dem zweiten Präsentationsoberflächenbereich während der Zeit erscheint, in der der Projektor blockiert ist.

3. Verfahren nach Anspruch 1, **dadurch gekennzeichnet, dass** der Projektor 7 Mal oder öfter je Sekunde blockiert wird.

4. Verfahren nach Anspruch 1, **dadurch gekennzeichnet, dass** der Projektor ein Bewegtbild von einer oder mehreren Personen auf dem zweiten Präsentationsoberflächenbereich zeigt.

5. Anordnung, um Festbilder und/oder Bewegtbilder in einem Videokonferenzsystem zu einem ersten Präsentationsoberflächenbereich zu senden oder zu übertragen, wobei ein oder mehrere Personen und ein zweiter Präsentationsoberflächenbereichs durch eine Kamera gefilmt werden, bei dem die eine oder mehreren Personen während dem Filmen den zweiten Präsentationsoberflächenbereich ganz oder teilweise abdecken, **dadurch gekennzeichnet, dass** die Anordnung umfasst:
- einen Senderraum, in dem zumindest eine Person eine Vorlesung oder Ähnliches gibt;
- einen zweiten Präsentationsoberflächenbereich, in dem irgendeine Art einer Präsentation, innerhalb der der Vorlesende zeigt, bei der Vorlesung gezeigt wird;
- zumindest eine Kamera zum Filmen der zumindest einen Person, wie dem Vorlesendem, und des zweiten Präsentationsoberflächenbereichs.
- einen Projektor, der die Präsentation als ein Bild auf dem zweiten Präsentationsoberflächenbereich erzeugt;
- eine LCD-Blende oder ein Gerät, das den Projektor zu gegebenen Zeiten blockiert;
- einen entfernt gelegenen Raum, der Information von dem Senderraum empfängt, wobei der entfernt gelegene Raum zumindest einen Projektor und den ersten Präsentationsoberflächenbereich einschließt,
wobei die zumindest eine Kamera die zumindest eine Person und den zweiten Präsentationsoberflächenbereich filmt, wenn der Projektor durch die LCD-Blende oder das Gerät für einen kurzen Augenblick blockiert ist, so dass ein Menschenauge dieses nicht wahrnimmt und das Bild auf dem zweiten Präsentationsoberflächenbereich nicht projiziert;
eine Vorrichtung zum Senden des Filmens der Person und des zweiten Präsentationsoberflächenbereiches;
eine Vorrichtung zum Trennen der Bilder der Person von dem Präsentationsbild in dem Filmen; und
eine Vorrichtung zum Überlagern der getrennten Bilder der Person und des Präsentationsbildes auf dem ersten Präsentationsoberflächenbereich.

6. Anordnung nach Anspruch 5, **dadurch gekennzeichnet, dass** eine LCD-Blende entweder Licht passieren lässt oder nicht transparent ist.

7. Anordnung nach Anspruch 5, **dadurch gekennzeichnet, dass** die LCD-Blende 7 Mal oder öfter je Sekunde nicht transparent wird.

8. Anordnung nach Anspruch 5, **dadurch gekennzeichnet, dass** eine der Kameras sowohl die Personen als auch den zweiten Präsentationsoberflächenbereich filmt, bei dem die zweite Kamera den zweiten Präsentationsoberflächenbereich filmt.

9. Anordnung nach Anspruch 5, **dadurch gekennzeichnet, dass** die Kameras "gegen-synchronisiert" sind, d.h. Licht von dem Projektor den Schirm nicht erreicht, wenn die Kamera filmt, die sowohl die Personen als auch dem zweiten Präsentationsoberflächenbereich filmt.

10. Anordnung nach Anspruch 5, **dadurch gekennzeichnet, dass** die zwei Räume als Senderraum und Empfängerraum zur gleichen Zeit dienen und erforderliche Ausrüstung dafür einschließt.

## Revendications

1. Procédé de transmission d'images immobiles et / ou animées dans un système de vidéoconférence vers une première surface de présentation, ledit procédé comprenant le filmage, à l'aide d'une caméra, d'une ou de plusieurs personnes et d'une seconde surface de présentation, dans lequel lesdites personnes couvrent en totalité ou en partie, au cours du filmage, ladite seconde surface de présentation, **caractérisé en ce que** ledit procédé comprend en outre les étapes consistant à :
bloquer un projecteur, qui produit une image de présentation sur la seconde surface de présentation pendant un court instant, de telle sorte qu'un oeil humain n'ait pas le temps de le percevoir ;
dans lequel ledit filmage de ladite personne et de ladite seconde surface de présentation, est exécuté au cours dudit moment de blocage, lorsque ladite image de présentation n'est pas affichée sur ladite seconde surface de présentation ;
transmettre ledit filmage de ladite personne et de ladite seconde surface de présentation ;
séparer les images desdites personnes de l'image de présentation dans ledit filmage ; et
superposer lesdites images séparées de ladite personne et de ladite image de présentation sur ladite première surface de présentation.

2. Procédé selon la revendication 1, **caractérisé en ce qu'**un arrière-plan avec une qualité définie à l'avance apparaît sur la seconde surface de présentation pendant que le projecteur est bloqué.

3. Procédé selon la revendication 1, **caractérisé en ce que** le projecteur est bloqué 7 fois ou plus par seconde.

4. Procédé selon la revendication 1, **caractérisé en ce que** le projecteur présente une image animée d'une ou de plusieurs personnes sur ladite seconde surface de présentation.

5. Agencement destiné à transférer ou à transmettre des images immobiles et / ou animées dans un système de vidéoconférence vers une première surface de présentation, où une caméra filme une ou plusieurs personnes et une seconde surface de présentation, où ladite ou lesdites personnes couvrent en totalité ou en partie, au cours du filmage, ladite seconde surface de présentation, **caractérisé en ce que** l'agencement comprend :
- une salle d'émission où au moins une personne donne une conférence ou similaire ;
- une seconde surface de présentation où un certain type de présentation est présenté, à l'intérieur de laquelle le conférencier pointe lors de la conférence ;
- au moins une caméra qui filme ladite au moins une personne, telle qu'un conférencier, et ladite seconde surface de présentation ;
- un projecteur qui produit ladite présentation sous la forme d'une image sur ladite seconde surface de présentation ;
- un obturateur à cristaux liquides ou un dispositif qui bloque ledit projecteur à des instants donnés ;
- une salle située à distance qui reçoit des informations en provenance de la salle d'émission, laquelle salle située à distance inclut au moins un projecteur et ladite première surface de présentation,
dans lequel l'au moins une caméra filme ladite au moins une personne et ladite seconde surface de présentation lorsque ledit projecteur est bloqué par ledit obturateur ou ledit dispositif à cristaux liquides pendant un court instant, de telle sorte qu'un oeil humain ne le perçoive pas, et ne projette pas ladite image sur ladite seconde surface de présentation ;
des moyens destinés à transmettre ledit filmage de ladite personne et de ladite seconde surface de présentation ;
des moyens destinés à séparer les images de la personne de l'image de présentation dans ledit filmage ; et
des moyens destinés à superposer lesdites images séparées de ladite personne et de l'image de présentation sur ladite première surface de présentation.

6. Agencement selon la revendication 5, **caractérisé en ce que** l'obturateur à cristaux liquides laisse passer la lumière ou n'est pas transparent.

7. Agencement selon la revendication 5, **caractérisé en ce que** l'obturateur à cristaux liquides n'est pas transparent 7 fois ou plus par seconde.

8. Agencement selon la revendication 5, **caractérisé en ce que** l'une desdites caméras filme lesdites personnes et la seconde surface de présentation, où ladite deuxième caméra filme ladite seconde surface de présentation.

9. Agencement selon la revendication 5, **caractérisé en ce que** lesdites caméras sont « synchronisées par compteur », à savoir que la lumière qui provient dudit projecteur n'atteint pas l'écran lorsque la caméra qui filme lesdites personnes et ladite seconde surface de présentation, est en train de filmer.

10. Agencement selon la revendication 5, **caractérisé en ce que** les deux salles servent en même temps de salle d'émission et de salle de réception, et incluent le matériel nécessaire à cette fin.
